(19) Europäisches Patentamt
European Patent Office
Office européen des brevets

(11) Numéro de publication: **0 002 142**
**B1**

(12) # FASCICULE DE BREVET EUROPEEN

(45) Date de publication du fascicule du brevet: **08.12.82**

(21) Numéro de dépôt: **78400118.2**

(22) Date de dépôt: **29.09.78**

(51) Int. Cl.³: **C 07 F 5/02,** C 01 B 6/13, C 01 B 6/34

(54) **Complexes de boranes, leur préparation et leur utilisation dans des réactions d'hydroboration et de réduction.**

(30) Priorité: **01.10.77 GB 4086277**
**31.05.78 GB 2565378**

(43) Date de publication de la demande:
**30.05.79 Bulletin 79/11**

(45) Mention de la délivrance du brevet:
**08.12.82 Bulletin 82/49**

(84) Etats contractants désignés:
**BE CH DE FR GB NL**

(73) Titulaire: **Société d'Expansion Scientifique EXPANSIA Société Anonyme**
**264, rue du Fauborg Saint-Honoré**
**F-75008 Paris (FR)**

(72) Inventeur: **Aspisi, Christian**
**Les Grands Vallons Chemin du Breuil**
**F-13150 Boulbon (FR)**
Inventeur: **Demosthene, Claude**
**Route de Théziers**
**F-30390 Aramon (FR)**

(74) Mandataire: **Lachassagne, Jacques**
**Boite Postale 07**
**F-78430 Louveciennes (FR)**

(56) Documents cités:
DE - B - 1 294 378
US - A - 3 674 853
US - A - 3 882 037
US - A - 3 928 293

M. FIESER et al "Reagents for Organic Synthesis" vol 4, 1974 J. WILEY AND SONS New York, London, Sydney, Toronto page 191

(56) References cited:
Chemical Abstracts vol. 88, no. 5, 30 January 78, Columbus, Ohio, U.S.A. H. C. BROWN et al "Monobromoborane: dimethyl sulfide; a new stable reagent for hydroboration, providing a general synthesis of dialkylbromoboranes and their derivatives" page 511, colonne 1, abstract no. 37868g

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 002 142 B1

# Complexes de boranes, leur préparation et leur utilisation dans des réactions d'hydroboration et de réduction

La présente invention concerne les complexes isolés de borane pouvant être utilisés dans des réactions d'hydroboration et de réduction.

Les réactions d'hydroboration et de réduction sont bien connues pour conduire à diverses fonctions organiques sur les composés présentant des liaisons multiples, avec des rendements généralement quantitatifs et une très sélectivité de position.

La plupart des agents d'hydroboration et de réduction connus présentent l'inconvénient d'être peu stables, ce qui gêne leur commercialisation. En effet, si le meilleur agent d'hydroboration est sans conteste le $B_2H_6$, on sait qu'il est délicat mais dangereux à utiliser. De nombreuses tentatives ont été faites en vue d'en obtenir soit une forme plus maniable, soit un dérivé plus stable. Le sulfure de diméthyle-borane constitue une première solution quoique moins actif que le $B_2H_6$ (Fieser and Fieser Reagents for Organic Synthesis Vol. 4, 1974, p. 191 — Wiley and Sons) et bien qu'étant plus stable, il présente l'inconvénient évoqué dans le brevet américain n° 3928293, colonne 1, lignes 30 à 51, à savoir que lors de son emploi, peu aisé, se dégage du sulfure de diméthyle qui contamine les autres produits.

Les complexes de borane obtenus selon l'invention sont stables aux conditions de température normale, au moins pendant de nombreux mois.

L'invention concerne des complexes isolés de boranes de formule générale:

$$R_4R_3HB{:}R_1SASR_2{:}BHR_3R_4$$

dans laquelle:

— A représente un radical hydrocarboné en chaine droite ou ramifiée contenant de 1 à 9 atomes de carbone;

— $R_1$ et $R_2$ représentent:

soit séparément chacun un radical alcoyle inférieur en chaine droite ou ramifiée, comprenant jusqu'à 5 atomes de carbone dans la chaine la plus longue, ou un radical benzyle éventuellement substitué par un ou plusieurs radicaux alcoyles inférieures comprenant jusqu'à 5 atomes de carbone ou par un ou plusieurs atomes d'halogène,

soit ensemble un radical hydrocarboné défini comme A ci-dessus constituant alors avec ce dernier et les deux atomes de soufre, un hétérocycle.

— $R_3$ et $R_4$ représentent chacun un atome d'hydrogène, un radical alcoyle inférieur, contenant jusqu'à 6 atomes de carbone.

A la température ambiante, ces composés sont, selon le cas, des liquides ou des solides. Par rapport au brevet américain n° 3 882 037, il y a sans conteste une amélioration. En effet, ce dernier porte sur une solution de diborane dans le THF stabilisé par le sulfure de diméthyle. En fait, il s'agit ni plus ni moins d'une solution du complex sulfure de diméthyle-borane dans le THF et elle possède la même réactivité. La présente invention permet de préparer des complexes de diborane dans des solvants qui sont éliminés aisément. Ces complexes sont alors isolés, à l'état solide ou liquide.

Lorsque ces composés sont sous forme liquide, aucun point d'ébullition n'est indiqué car la décomposition intervient avant l'ébullition; les points de fusion des corps solides ont, par contre, toujours été indiqués. Ils sont miscibles ou solubles dans différents solvants tels que le benzène, l'éther éthylique, le chlorure de méthylène, le tétrahydrofuranne et le diglyme et leur concentration de facteur d'hydroboration est plus élevée que celle des agents d'hydroboration précédemment utilisés.

Les complexes $H_3B{:}R_1SASR_2{:}BH_3$ sont au moins aussi stables que le sulfure de méthyle-borane par exemple.

Les complexes $R_4R_3HB{:}R_1SASR_2{:}BHR_3R_4$ n'ont pas nécessairement besoin d'être préparés in situ avant d'effectuer la réaction comme c'était le cas avec les composants de base connus ($BHR_3R_4$) tels que le thexylborane ou le disiamylborane, par exemple. Ils sont par conséquent plus faciles à manipuler.

La réactivité des composés dans lesquels la portion borane n'est pas substituée est comparable à celle du complexe sulfure de diméthyle-borane; la réactivité des composés dans lesquels la portion borane est substituée est comparable à celle des boranes connus semblablement substitués; mais dans les deux cas, les vitesses de réaction sont plus élevées qu'avec les complexes connus auparavent.

Certains représentant inférieurs de la famille, i.e. ceux dans lesquels $R_1 = R_2 = CH_3$ avec $A = CH_2$, $(CH_2)_2$ ou $(CH_2)_3$ et $R_1 = R_2 =$ tertiobutyle avec $A = CH_2$, ont une structure légèrement différente de celle représentée ci-dessus en retenant tous les avantages mentionnés.

On peut préparer ces composés selon une méthode dérivée de celle décrite par BROWN H.C. dans "Organic Synthesis via Boranes" (Wiley Interscience, NEW YORK. N. Y. 1975), en utilisant un appareillage similaire.

Plus précisément, on peut obtenir des composés selon cette invention, en faisant réagir, dans un solvant aprotique, dans une atmosphère inerte, à une température inférieure à 40°C et en agitant énergiquement un composé de la formule générale $R_1SASR_2$, où $R_1$, $R_2$ et A sont définis comme ci-avant avec un borane de la formule générale $(BHR_3R_4)_2$, où $R_3$ et $R_4$ sont définis comme ci-avant. On

élimine ensuite le solvant par distillation en pression réduite pour isoler le complexe. On peut obtenir le composé $R_1SASR_2$ à partir des alcoyles dithiols commerciaux correspondants de la formule générale HSASH par S-alcoylation avec un halogénure d'aralcoyle ou d'alcoyle selon la méthode décrite par OVERBERGER et SCHILLER, J. Org. Chem. *26,* 4232 (1961) ou par action des thiols commerciaux sur le dihalogèno alcane approprié par les méthodes classiques ou par catalyse de transfert de phase selon la méthode décrite par A. W. HERRIOT, Synthesis, p. 447, juillet 1975; on peut obtenir le borane par toutes les façons conventionelles bien connues ou à partir d'un complexe $BH_3$:base de Lewis. On peut, par exemple, obtenir les boranes substitués selon la méthode décrite par BROWN H. C. et MANDAL A. K., Synthesis, *2,* 146, (1978) ou par celle décrite par BROWN H. C., MANDAL A. K. et KULKARNI S. U., J. Org. Chem. *42* (8), 1392, (1977).

En outre, ces composés, dans lesquels $R_3$ et $R_4$ ne représentent pas l'hydrogène, peuvent être préparés en faisant réagir, dans les conditions données ci-dessus, un composé $H_3B:R_1SASR_2:BH_3$ avec les alcènes appropriés. Dans cette réaction, le composé $H_3B:R_1SASR_2:BH_3$ est utilisé comme agent d'hydroboration. Ce procédé de préparation, comme celui décrit dans le paragraphe précédent, rentre dans le cadre de l'invention.

L'invention concerne également des procédés d'hydroboration et des procédés de réduction, dans lesquels les boranes de la formule générale $R_4R_3HB:R_1SASR_2:BHR_3R_4$, comme définis ci-avant, sont utilisés comme agents d'hydroboration ou agents de réduction respectivement.

Cette invention est illustrée par les exemples suivants:

### Exemple 1

Bis thiométhyle-1, 2 éthane, diborane

$R_1 = R_2 = CH_3$; $R_3 = R_4 = H$; $A = -(CH_2)_2$

55 g. (0,45 mole) de bis thiométhyle-1,2 éthane dans 200 ml. de chlorure de méthylène préalablement distillé sur hydrure de calcium ont été versés dans un réacteur de 2 litres maintenu sous circulation d'azote. 0,5 mole de diborane ($B_2H_6$) a été injectée lentement (1 heure) dans la réacteur en agitant énergiquement.

Le diborane a été obtenu à partir de 28,5 g. (0,75 mole) de borohydrure de sodium (pureté:98%) dissout dans 200 ml. de diglyme préalablement distillé sur hydrure d'aluminium-lithium, sur lequel on fait couler goutte à goutte 123 ml. (1 mole) de trifluorure de bore éthérate, également préalablement distillé. Le mélange $BH_4Na$-$BF_3/(C_2H_5)_2O$ a été chauffé à 60°C pendant 15 minutes.

Après avoir laissé le mélange réactionnel se refroidir, il a été mis sous courant d'azote pendant une heure, puis le solvant est éliminé sous pression réduite. Le complexe ainsi obtenu est ensuite conservé à température ambiante ou, de préférence, à une température légèrement inférieure à celle-ci, sous atmosphère d'azote. L'identité et la structure de ce composé ont été confirmés par l'analyse comme indiqué après les exemples. Rendement 57 g. (85%). Ce composé est un liquide.

### Exemple 2

Bis thiométhyle-1,4 butane, diborane

$R_1 = R_2 = CH_3$; $R_3 = R_4 = H$; $A = -(CH_2)_4$

Ce composé a été obtenu (rendement 82%) en procédant comme dans l'exemple 1, mais en utilisant du bis thiométhyle-1,4 butane au lieu du bis thiométhyle-1,2 éthane. L'identité et la structure de ce composé ont été confirmés par l'analyse comme indiqué après les exemples. Ce composé est un liquide.

### Exemple 3

Bis thiométhyle-1,9 nonane, diborane

$R_1 = R_2 = CH_3$; $R_3 = R_4 = H$; $A = -(CH_2)_9$

Ce composé a été obtenu (rendement 100%) en procédant comme dans l'exemple 1, mais en utilisant du bis thiométhyle-1,9 nonane ($n_D^{20}$:1,4960) au lieu du bis thiométhyle-1,2 éthane. L'identité et la structure de ce composé ont été confirmés par l'analyse comme indiqué après les exemples. Ce composé est un liquide.

### Exemple 4

Bis thiobenzyle-1,4 butane, diborane

$R_1 = R_2 =$ benzyle; $R_3 = R_4 = H$; $A = -(CH_2)_4$

Ce composé a été obtenu (rendement 94%) par la méthode décrite dans l'exemple 1, mais en utilisant du bis thiobenzyle-1,4 butane ($n_D^{20}$:1,5920) au lieu du bis thiométhyle-1,2 éthane. L'identité et la structure de ce composé ont été confirmés par l'analyse comme indiqué après les exemples. Ce composé est un solide blanc fondant à 88—91°C (Koffler).

### Exemple 5

Bis thiobenzyle-1,6 hexane, diborane

$R_1 = R_2 =$ benzyle; $R_3 = R_4 = H$; $A = -(CH_2)_6$

Ce composé a été obtenu (rendement 98%) par la méthode décrite dans l'exemple 1, mais en

utilisant du bis thiobenzyle-1,6 hexane ($n_D^{20}$:1,580) au lieu du bis thiométhyle-1,2 éthane. L'identité et la structure de ce composé ont été confirmés par l'analyse comme indiqué après les exemples. Ce composé est sous forme liquide.

Exemple 6

Bis thio t. butyle-1,1 méthane, borane

$R_1 = R_2 =$ t.butyle; $R_3 = R_4 = H$; $A = -CH_2-$

Ce composé a été obtenu (rendement 88%) par la méthode décrite dans l'exemple 1, mais en utilisant du bis thio t.butyle-1,1 méthane ($n_D^{25} = 1{,}485$) au lieu du bis thiométhyle-1,2 éthane. L'identité et la structure de ce composé ont été confirmés par l'analyse comme indiqué après les exemples. Ce composé est un liquide.

Exemple 7

Bis thio t.butyle-1,2 éthane, diborane

$R_1 = R_2 =$ t.butyle; $R_3 = R_4 = H$; $A = -(CH_2)_2-$

Ce composé a été obtenu (rendement 65%) par la méthode décrite dans l'exemple 1, mais en utilisant du bis thio t.butyle-1,2 éthane ($n_D^{21}$:1,486) au lieu du bis thiométhyle-1,2 éthane. L'identité et la structure de ce composé ont été confirmés par l'analyse comme indiqué après les exemples. Ce composé est un solide blanc, fondant à 50—52°C (Koffler).

Exemple 8

Bis thio t.butyle-1,2 propane, diborane

$R_1 = R_2 =$ t.butyle; $R_3 = R_4 = H$; $A = CH_2-CH-$

$|$

$CH_3$

Ce composé a été obtenu (rendement 100%) par la méthode décrite dans l'exemple 1, mais en utilisant du bis thio t.butyle-1,2 propane ($n_D^{23} = 1{,}484$) au lieu du bis thiométhyle-1,2 éthane. L'identité et la structure de ce composé ont été confirmés par l'analyse comme indiqué après les exemples. Ce composé est un liquide.

Exemple 9

Dithia-1,5 cyclooctane, diborane

$R_1 + R_2 = -(CH_2)_3-$; $R_3 = R_4 = H$; $A = -(CH_2)_3-$

Ce composé a été obtenu (rendement 67%) par la méthode décrite dans l'exemple 1 mais en utilisant du dithia-1,5 cyclooctane ($n_D^{25} = 1{,}577$) au lieu du bis thiométhyle-1,2 éthane. L'identité et la structure de ce composé ont été confirmés par l'analyse, comme indiqué après les exemples.

Exemple 10

Bis thio t.butyle-1,2 éthane, dithexylborane

$R_1 = R_2 =$ t.butyle; $R_3 = H$; $R_4 =$ thexyle; $A = -(CH_2)_2-$

Ce composé a été obtenu en ajoutant à 0,05 mole de thexylborane (dont on a vérifié la pureté par hydrolyse d'une aliquote) 5,15 g. (0,025 mole) de bis thio t.butyle-1,2 éthane dissout dans 30 ml. de chlorure de méthylène, fraîchement distillé sur hydrure de calcium, en maintenant la température à 25°C. Le mélange a été agité pendant quatre heures à 25°C, puis le solvant évaporé sous pression réduite. L'identité et la structure de ce composé ont été confirmés par l'analyse comme indiqué après les exemples. Rendement environ 7 g. (70%). Ce composé est un liquide.

Ce composé est obtenu sous la forme dimère suivante:

Bu.t–S $(CH_2)_2$ S–t.Bu

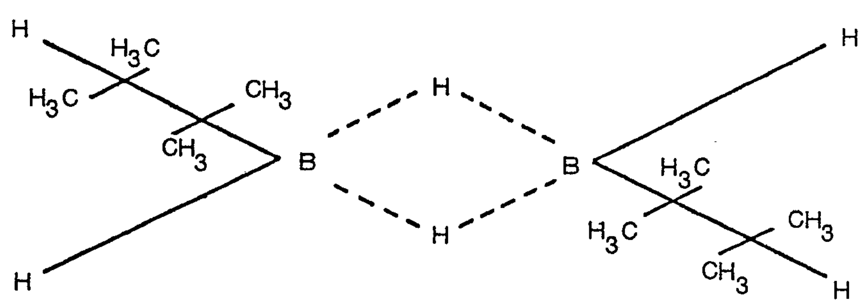

Exemple 11

Bis thio t.butyle-1,9 nonane, dithexylborane

$R_1 = R_2 =$ t.butyle; $R_3 = H$; $R_4 =$ thexyle; $A = -(CH_2)_9-$

Ce composé a été obtenu (rendement 75%) par la méthode décrite dans l'exemple 10, mais en

utilisant du bis thio t.butyle-1,9 nonane ($n_D^{21} = 1,4802$) au lieu du bis thio t.butyle-1,2 éthane. L'identité et la structure de ce composé ont été confirmés par l'analyse comme indiqué après les exemples. Ce composé est également sous forme dimère et c'est un liquide.

Exemple 12

Bis thiobenzyle-1,4 butane, didisiamyle borane

$R_1 = R_2$ = benzyle; $R_3 = R_4$ = disiamyle; A = $—(CH_2)_4$

Ce composé a été obtenu en ajoutant à 25 ml. (0,05 mole) d'une solution 2M de disiamylborane dans du tétrahydrofuranne (dont on a vérifié la pureté par hydrolyse d'une aliquote) 7,6 g. (0,025 mole) de bis thiobenzyle-1,4 butane, à température ambiante. Le mélange est agité pendant une heure à 25°C, puis une heure à 35°C, puis le solvant est évaporé sous pression réduite. L'identité et la structure de ce composé ont été confirmés par l'analyse comme indiqué après les exemples. Rendement 100% (15,3 g.). Ce composé est un liquide.

On obtient ce composé sous la forme dimère suivante:

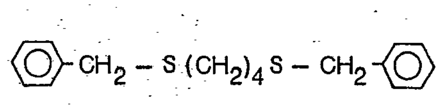

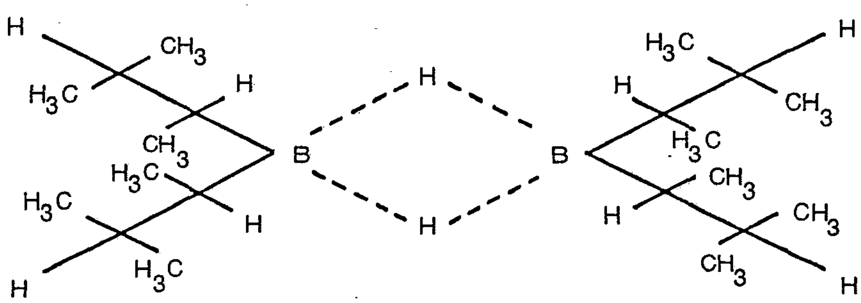

Exemple 13

Bis thio t.butyle-1,2 éthane, dithexylborane

$R_1 = R_2$ = t.butyle; $R_3$ = H; $R_4$ = thexyle; A = $—(CH_2)_2$

Ce composé a été obtenu (rendement 95%) en ajoutant, à 0°C, à une solution de 5,14 g. (22 mmoles) de bis thio t.butyle-1,2 éthane, diborane, dans 40 ml. de chlorure de méthylène, 1,7 g. (20 mmoles) de diméthyl-2,3 butène-2.

Le mélange a été agité énergiquement jusqu'à ce que la température atteigne 20°C puis, après addition de 1,7 g. (20 mmoles) de diméthyl-2,3 butène-2, l'agitation a été poursuivie 4 heures à 25°C, 1 heure à 40°C et le solvant évaporé sous pression réduite. L'identité et la structure de ce composé — qui est identique à celui obtenu dans l'exemple 10 — ont été confirmés par l'analyse comme indiqué après les exemples. Ce composé est un liquide.

Exemple 14

Bis thio t.butyle-1,2 éthane, didisiamylborane

$R_1 = R_2$ = t.butyle; $R_3 = R_4$ = disiamyle; A = $—(CH_2)_2$

Ce composé a été obtenu (rendement 90%) en ajoutant à une solution de 5,14 g. (22 mmoles) de bis thio t.butyle-1,2 éthane, diborane, dans 40 ml. de chlorure de méthylène, à −5°C, 2,8 g. (40 mmoles) de méthyl-2 butène-2.

Le mélange a été agité jusqu'à ce que la température atteigne 20°C puis, après addition de 2,8 g. (40 mmoles) de méthyl-2 butène-2, l'agitation a été poursuivie 4 heures à 25°C, 1 heure à 40°C et le solvant évaporé sous pression réduite. L'identité et la structure de ce composé ont été confirmés par l'analyse comme indiqué après les exemples. Ce composé est un liquide; il est sous forme dimère comme celle du composé obtenu dans l'exemple 12.

La stoechiométrie et la pureté des complexes obtenus dans les exemples sont vérifiés par méthanolyse selon la technique décrite par J. BERES, A. DODDS, A. J. MORABITO et R. M. ADAMS, Inorg. Chem., 10, (9), 2072, (1971), et par microanalyse. La structure est confirmée par analyse infra-rouge, montrant des bandes d'absorption de 2.400 $cm^{-1}$ à 2.350 $cm^{-1}$ (dans $CCl_4$ à 2%) caractéristiques des liaisons B—H des complexes de diboranes ou de 2.450 $cm^{-1}$ à 2.500 $cm^{-1}$ (faibles) et 1.560 $cm^{-1}$ (fort) caractéristiques des liaisons B----H----B de complexes substitués de diborane (BROWN H. C., NEGISHI E., KATZ J. J., J. Am. Chem. Soc., 97, 2791, (1075). La structure est aussi confirmée par résonance magnétique nucléaire ($H^1$) et ($B^{11}$).

On a étudié pendant de nombreux mois et vérifié régulièrement la stabilité des complexes obtenus par méthanolyse, par spectométrie infra-rouge et aussi par comparaison de la cinétique de

décomposition gazeuse, sous pression réduite; la comparaison est faite avec du sulfure de diméthyle borane pour les composés dans lesquels la portion borane n'est pas substituée et avec les boranes substitués correspondants pour les composés dans lesquels la portion borane est substituée. Les produits stockés sous azote et à basse température n'ont montré aucune altération.

L'activité et l'intérêt des composés selon cette invention ont été vérifiés en réactions d'hydroboration par le méthode décrite par L. M. BRAUN, R. A. BRAUN, H. R. CUISSMANN, M. OPPERMAN et R. M. ADAMS, J. Org. Chem., *36,* (16), 2388, (1971) sur le méthyl-4 pentène-2 cis, comparativement avec le sulfure de diméthyle borane et le composé décrit dans le brevet U.S. 3 928 293; l'excellente sélectivité de réaction et le rendement quantitatif d'hydroboration ont été confirmés avec, *dans tous les cas, des vitesses de réaction plus élevée.* Les quantités d'alcools isomères obtenus ont été mesurées par chromatographie gazeuse; ces alcools sont synthétisés par oxydation de l'organoborane obtenu à l'aide de $H_2O_2$ ou du N-Oxyde de triethylamine.

L'activite des composés selon cette invention a aussi été vérifiée dans des réactions de réduction, en comparaison avec celle des complexes de boranes correspondants disponibles dans le commerce, par les méthodes de BROWN H. C. et SUBBA ROA B. C., J. Amer. Chem. Soc. *22,* 1135, (1957) ou BROWN H. C., BIGLEY D. B., AROBA S. K. et YOON N. H., J. Amer. Chem. Soc., *92,* 7161, (1970) par exemple avec de la méthyl-2 cyclohexanone comme composé de référence. Dans tous les cas, les résultats sont meilleurs que le sulfure de diméthyle borane et le composé décrit dans le brevet U.S. 3 928 293 et confirment ceux trouvés dans la littérature (CRAGG "Organoboranes in Organic Synthesis" Marcel Dekker Inc., New York, 1973, page 327), avec les avantages d'une manipulation plus facile et d'une meilleure stabilité. Les quantités d'alcools isomères obtenues ont été mesurées par chromatographie gazeuse; les alcools sont synthétisés par oxydation de l'organoborane obtenu à l'aide de $H_2O_2$ ou du N-oxyde de triethylamine.

## Revendications

1. Complexes isolés de boranes de formule:

$$R_4R_3HB:R_1SASR_2:BHR_3R_4$$

dans laquelle:

— A représente un radical hydrocarbone en chaine droite ou ramifiée contenant de 1 à 9 atomes de carbone,

— $R_1$ et $R_2$ représentent:

soit séparément chacun un radical alcoyle inférieur en chaine droite ou ramifiée, comprenant jusqu'à 5 atomes de carbone dans la chaine la plus longue, ou un radical benzyle éventuellement substitué par un ou plusieurs radicaux alcoyles inférieurs comprenant jusqu'à 5 atomes de carbone ou par un ou plusieurs atomes d'halogène,

soit ensemble un radical hydrocarboné défini comme A ci-dessus constituant alors avec ce dernier et les deux atomes de soufre, un hétérocycle.

— $R_3$ et $R_4$ représentent chacun un atome d'hydrogène, un radical alcoyle inférieur comprenant jusqu'à 6 atomes de carbone.

2. Procédé de préparation des composés selon la revendication 1 consistant à faire réagir, dans un solvant aprotique, sous agitation, en atmosphère inerte et à une température inférieure à 40°C, l'alcane bis thioaralcoyle/alcoyle approprié sur le borane ou le borane substitué approprié, caractérisé en ce que l'on évacue le solvant aprotique sous pression réduite en fin de réactions.

3. Procédé de préparation des composés selon la revendication 1, dans lesquels $R_3$ et $R_4$ sont un radical alcoyle inférieur comprenant jusqu'à 6 atomes de carbone, caractérisé en ce que l'on fait réagir l'alcène approprié sur le complexe $H_3B:R_1SASR_2:BH_3$.

4. Procédé d'hydroboration caractérisé en ce que l'agent d'hydroboration utilisé consiste en l'un des composés selon la revendication 1.

5. Procédé de réduction caractérisé en ce que l'agent de réduction utilisé consiste en l'un des composés selon la revendication 1.

## Claims

1. Isolated complexes of boranes of the formula:

$$R_4R_3HB:R_1SASR_2:BHR_3R_4$$

in which:

— A represents a hydrocarbon radical with straight or branched chain containing from 1 to 9 carbon atoms,

— $R_1$ and $R_2$ represent; either each separately a lower alkyl radical with straight or branched chain, comprising up to 5 carbon atoms in the longest chain, or a benzyl radical possibly substituted by

one or several lower alkyl radicals comprising up to 5 carbon atoms or by one or several halogen atoms, or together a hydrocarbon radical defined like A above and, with the latter and the two atoms of sulphur, making a heterocyclic ring,

— $R_3$ and $R_4$ each represent a hydrogen atom or a lower alkyl radical comprising up to 6 carbon atoms.

2. Process of preparation of compounds according to claim 1 consisting of reacting in an aprotic solvent, under agitation, in an inert atmósphere and at a temperature lower than 40°C, the appropriate bis-thioaralkyl/alkyl alkane with borane or the appropriately substituted borane, characterized in that one removes the aprotic solvent under reduced pressure at the end of the reactions.

3. Process of preparation of compounds according to claim 1, in which $R_3$ and $R_4$ are a lower alkyl radical comprising up to 6 carbon atoms, characterized in that one reacts the apropriate alkene with the complex $H_3B{:}R_1SASR_2{:}BH_3$.

4. Hydroboration process characterized in that the hydroboration agent used consists of one of the compounds according to claim 1.

5. Reduction process characterized in that the reducing agent used consists of one of the compounds according to claim 1.

**Patentansprüche**

1. Isolierte Komplexe von Boranen mit der Formel

$$R_4R_3HB{:}R_1SASR_2{:}BHR_3R_4,$$

worin

A einen Kohlenwasserstoffrest mit gerader oder verzweigter Kette mit 1 bis 9 Kohlenstoffatomen darstellt,

$R_1$ und $R_2$ die Bedeutung haben:

entweder getrennt jeweils von einem Niedrigalkylrest mit gerader oder verzweigter Kette, mit bis zu 5 Kohlenstoffatomen in der längsten Kette, oder von einem Benzylrest, der gegebenenfalls durch einen oder mehrere Niedrigalklreste mit bis zu 5 Kohlenstoffatomen oder durch ein oder mehrere Halogenatome substituiert ist, oder zusammen von einem Kohlenwasserstoffrest, wie vorstehend für A definiert, der mit letzterem und den beiden Schwefelatomen einen Heterozyklus bildet,

$R_3$ und $R_4$ jeweils ein Wasserstoffatom, einen Niedrigalkylrest mit bis zu 6 Kohlenstoffatomen bedeuten.

2. Verfahren zur Herstellung der Verbindungen nach Anspruch 1 durch Reaktion des geeigneten Bis-thioaralkyl/alkyl-alkans mit dem geeigneten Boran oder substituierten Boran, in einem aprotischen Lösungsmittel unter Rühren unter inerter Atmosphäre und bei einer Temperatur unter 40°C, dadurch gekennzeichnet, dass man das aprotische Lösungsmittel unter verringertem Druck am Ende der Reaktionen abzieht.

3. Verfahren zur Herstellung von Verbindungen nach Anspruch 1, worin $R_3$ und $R_4$ einen Niedrigalkylrest mit bis zu 6 Kohlenstoffatomen darstellen, dadurch gekennzeichnet, dass man das geeignete Alken mit dem Komplex $H_3B{:}R_1SASR_2{:}BH_3$ reagieren lässt.

4. Hydroborierungsverfahren, dadurch gekennzeichnet, dass das verwendete Hydroborierungsmittel aus einer der Verbindungen nach Anspruch 1 besteht.

5. Reduktionsverfahren, dadurch gekennzeichnet, das das verwendete Reduktionsmittel aus einer der Verbindungen nach Anspruch 1 besteht.